# DEMANDE DE BREVET EUROPEEN

(11) **EP 2 375 096 A1**
(43) Date de publication de la demande: **12.10.2011**
(21) Numéro de dépôt: 11156239.3
(22) Date de dépôt: 28.02.2011
(51) Int. Cl.: F16F 1/366, B60R 19/34

(54) **Dispositif d'absorption de choc pour véhicule automobile**

(30) Priorité: 06.04.2010 FR 1052564
(71) Demandeur: Akka Ingenierie Produit, 92300 Levallois-Perret (FR)
(72) Inventeur: Ricci, Maurice, 69002, LYON (FR); Villedieu, Christophe, 91310, LONGPONT SUR ORGE (FR); Guillaume, Stéphane, 91160, LONGJUMEAU (FR)
(74) Mandataire: Gaillarde, Frédéric F. Ch.

(57) **Abrégé**

Ce dispositif d'absorption de choc en matériaux composites destiné à être interposé entre un pare-choc et le châssis d'un véhicule automobile, est remarquable en ce qu'il comprend un premier élément (1) en matériau composite, adapté pour absorber un choc à vitesse relativement basse, et un deuxième élément (3) en matériau composite, adapté pour absorber un choc à vitesse relativement élevée, ces éléments (1,3) étant respectivement conçus et agencés pour que seul ledit premier élément (1) se déforme en cas de choc d'intensité inférieure à un seuil prédéterminé. 3 platines sont proposées, une platine (5) fixée au pare-choc, une platine fixée au chassis (19) et une platine intermédiaire (11).

## Description

La présente invention se rapporte à un dispositif d'absorption de choc pour véhicule automobile.

Classiquement, on dispose des moyens d'absorption de choc entre le pare-choc avant et la partie avant du châssis d'un véhicule automobile : de tels moyens sont conçus pour se déformer en cas de choc, permettant de dissiper une grande partie de l'énergie cinétique du choc et de limiter ainsi l'impact sur la structure du véhicule et sur ses passagers.

Durant les dernières décennies, de nombreuses recherches ont été consacrées à la réduction du poids des matériaux installés sur les véhicules automobiles, et ces recherches ont abouti notamment à l'utilisation de plus en plus fréquente de matériaux composites : ces derniers présentent en effet un excellent rapport résistance mécanique/poids.

De plus, ces matériaux composites peuvent être fabriqués de manière qu'en cas de choc, ils se déforment d'une manière prévisible : les moyens de modélisation du comportement de ces matériaux composites permettent en effet de sélectionner les matrices et fibres optimales, ainsi que d'optimiser l'agencement des plis de composite vis-à-vis des efforts en jeu en cas de choc.

De tels matériaux composites ont ainsi été utilisés notamment comme moyen d'absorption de choc entre le pare-choc avant et la partie avant du châssis d'un véhicule automobile.

Il existe un besoin pour qu'un tel moyen d'absorption de choc en matériau composite ne nécessite pas un remplacement complet en cas de choc léger, souvent désigné « choc réparabilité » par l'homme du métier.

Un tel choc, correspondant classiquement à un choc avec un objet fixe ou mobile à une vitesse inférieure à 16 km/h, et à un effort inférieur à 17 tonnes, est normalisé sous l'appellation « Danner » : les dégâts provoqués par ce choc normalisé doivent rester en dessous d'un seuil imposé notamment par les compagnies d'assurance.

Le remplacement complet d'un moyen d'absorption de choc en matériau composite est en effet coûteux, et les compagnies d'assurance sont dans l'obligation d'augmenter leurs tarifs si un tel remplacement complet est nécessaire à la suite d'un choc Danner.

Il existe par ailleurs un besoin de réduction de l'encombrement du moyen d'absorption de choc selon la direction longitudinale du véhicule : c'est le cas notamment pour les véhicules de très petite taille que l'on commence à fabriquer aujourd'hui, et notamment pour les véhicules électriques.

La présente invention a ainsi notamment pour buts de fournir un moyen d'absorption de choc en matériaux composites destiné à être interposé entre un pare-choc et le châssis d'un véhicule automobile, qui nécessite une réparation minime en cas de choc de type Danner, et présente un faible encombrement.

On atteint ce but de l'invention, ainsi que d'autres qui apparaîtront à la lecture de la description qui va suivre, avec un dispositif d'absorption de choc en matériaux composites destiné à être interposé entre un pare-choc et le châssis d'un véhicule automobile, remarquable en ce qu'il comprend un premier élément en matériau composite, adapté pour absorber un choc à vitesse relativement basse, et un deuxième élément en matériau composite, adapté pour absorber un choc à vitesse relativement élevée, ces éléments étant respectivement conçus et agencés pour que seul ledit premier élément se déforme en cas de choc d'intensité inférieure à un seuil prédéterminé.

Grâce à ces caractéristiques, tant que le choc reste inférieur au seuil prédéterminé (pouvant être choisi égal à 17 tonnes, correspondant à un choc de type Danner), les dégâts ne concernent que le premier élément en matériau composite.

Seul ce premier élément est donc à changer, et non l'ensemble du dispositif d'absorption de choc.

De plus, cette conception en deux éléments permet d'optimiser les dimensionnements respectifs de ces éléments vis-à-vis de chocs respectivement à basse et haute vitesse, eu égard notamment à des contraintes d'encombrement longitudinal imposées par le cahier des charges de la conception du véhicule.

Suivant d'autres caractéristiques optionnelles du dispositif d'absorption de choc selon l'invention :
- lesdits moyens d'absorption de choc comprennent :
   - une première platine d'extrémité, destinée à être fixée audit pare-choc,
   - une deuxième platine d'extrémité, destinée à être fixée audit châssis,
   - une platine intermédiaire,
      ledit premier élément étant interposé entre ladite première platine et ladite platine intermédiaire, et ledit deuxième élément étant interposé entre ladite platine intermédiaire et ladite deuxième platine ;
- ledit premier élément présente une longueur inférieure audit deuxième élément ;
- lesdits moyens d'absorption de choc comprennent :
   - une première platine d'extrémité, destinée à être fixée audit pare-choc,
   - une deuxième platine d'extrémité, destinée à être fixée audit châssis,
   - une platine intermédiaire munie d'un orifice,
      ledit premier élément présentant une longueur supérieure à celle dudit deuxième élément, et étant interposé entre ladite première platine et ladite deuxième platine en traversant ladite platine intermédiaire, et ledit deuxième élément étant concentrique audit premier élément et étant interposé entre ladite platine intermédiaire et ladite deuxième platine ;
- lesdits premier et deuxième éléments sont reliés auxdites platines par des moyens de fixation choisis dans le groupe comprenant le collage et le rivetage ;
- lesdites platines incorporent des formes de centrage desdits éléments, dont la section l'élargit dans la zone de raccord avec le plan de ladite platine : ces formes évasées de centrage permettent de guider la déformation des premier et deuxième éléments vers l'extérieur lors d'un choc ;
- lesdites platines sont formées en alliage métallique choisi dans le groupe comprenant les aciers et les alliages à base d'aluminium ;
- lesdits éléments et lesdites platines sont formés d'un seul tenant en matériau composite ;
- des barres sont fixées auxdites platines ,
- lesdits premier et deuxième éléments sont cylindriques ;
- les sections desdits premier et deuxième éléments sont choisies dans le groupe comprenant les sections circulaires et polygonales ;
- la section dudit premier élément est inférieure à celle dudit deuxième élément ;
- lesdits premier et deuxième éléments sont formés à partir de plis superposés de composites dont les fibres sont orientées dans différentes directions ;
- lesdits premier et deuxième éléments sont formés à partir de plis de composites superposés, dont le nombre de couches augmente en allant de la zone de ces éléments destinée à être la plus proche dudit pare-choc, à la zone de ces éléments destinée à être la plus proche dudit châssis ;
- lesdits premier et deuxième éléments sont formés à partir de plis de composites à fibres de verre et à matrice choisie dans le groupe comprenant le polyester et l'époxy.

La présente invention se rapporte également à un véhicule automobile comprenant un pare-choc et un châssis, remarquable en ce qu'il comprend au moins un dispositif d'absorption de choc conforme à ce qui précède, interposé entre ledit pare-choc et ledit châssis.

D'autres caractéristiques et avantages de la présente invention apparaîtront à la lumière de la description qui va suivre, et à l'examen des figures ci-annexées, dans lesquelles :
- les figures 1A et 1B représentent, respectivement en vue de côté et en vue en perspective, un premier mode de réalisation d'un dispositif d'absorption de chocs selon l'invention,
- les figures 2A et 2B représentent, respectivement en vue de côté et en vue en perspective, un deuxième mode de réalisation du dispositif d'absorption de chocs selon l'invention,
- les figures 3A et 3B représentent, respectivement en vue de coté en et perspective, un troisième mode de réalisation d'un dispositif d'absorption de chocs selon l'invention,
- la figure 4 représente, en perspective, une variante du premier mode de réalisation de l'invention,
- les figures 5A et 5B représentent, respectivement en vue de côté et en perspective, une première platine d'extrémité du dispositif des figures 1A et 1B,
- la figure 6 représente, en vue de côté, un premier élément en matériau composite du dispositif d'absorption de chocs des figures 1A et 1B,
- la figure 7 représente, en vue de côté, une platine intermédiaire du dispositif d'absorption de chocs des figures 1A et 1B, et
- la figure 8 représente, en perspective, la modélisation d'un choc sur le dispositif des figures 1A et 1B.

Sur l'ensemble de ces figures, des références identiques ou analogues désignent des organes ou ensembles d'organes identiques ou analogues.

On a représenté sur ces figures des repères XYZ, dont les trois directions respectives X, Y et Z correspondent classiquement aux directions longitudinale, transversale et verticale d'un véhicule automobile sur lequel le dispositif d'absorption de chocs selon l'invention est destiné à être installé.

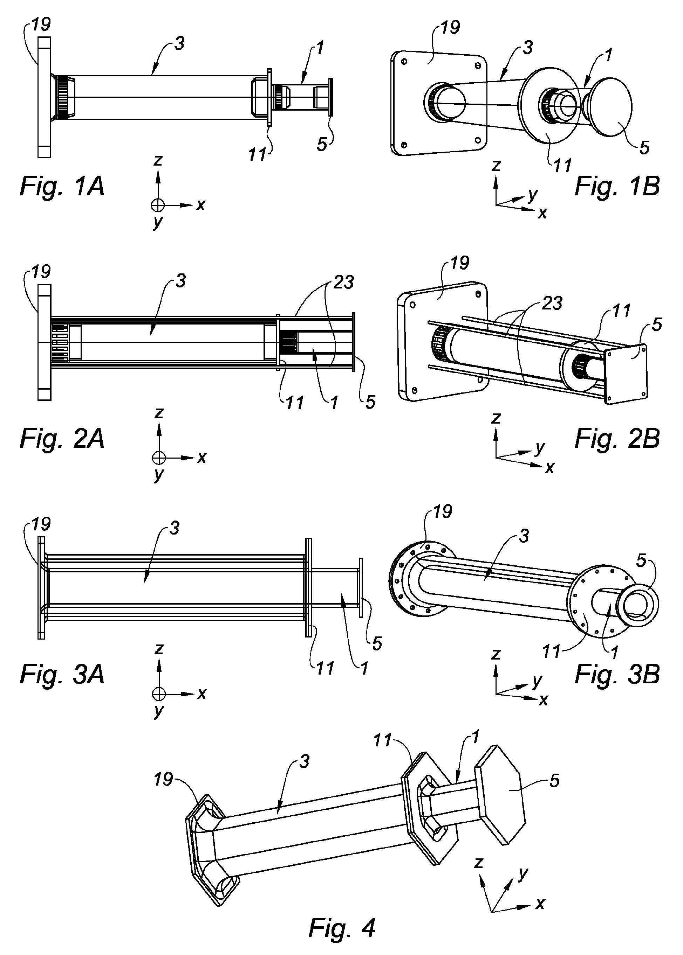

On se reporte à présent aux figures 1A et 1B, sur lesquelles on peur voir que le dispositif d'absorption de chocs selon l'invention comprend un premier élément 1 adapté pour absorber un choc à vitesse relative basse, et un deuxième élément 3 adapté pour absorber un choc à vitesse relativement élevée.

Ces deux éléments sont formés en matériau composite, et sont respectivement adaptés pour qu'en cas de choc selon la direction de l'axe X, venant de la droite des figures 1A et 1B, le premier élément 1 s'écrase avant le deuxième élément 3.

Pour fixer les idées, et sans bien entendu que cela soit limitatif, le premier élément 1 peut présenter une longueur de l'ordre de 90 mm selon la direction X, et le deuxième élément 3 peur présenter une longueur de l'ordre de 340 mm selon cette même direction.

La nature des plis de composite ainsi que la manière dont ils sont agencés pour constituer chacun des éléments 1 et 3, sont telles qu'en cas de choc selon la direction X provenant de la droite des figures 1A et 1B, le premier élément 1 s'écrase avant que ne commence l'écrasement du deuxième élément 3.

Plus précisément, on dimensionne ces deux éléments de manière que seul le premier élément 1 s'écrase lorsque les efforts liés aux chocs restent inférieurs à un premier seuil prédéterminé, et que le deuxième élément s'écrase sans dommage transmis au châssis du véhicule lorsque les efforts du choc restent inférieurs à un deuxième seuil prédéterminé, supérieur audit premier seuil.

En pratique, ces deux seuils respectifs des efforts sont de l'ordre de 17 et de 30 tonnes, et correspondent à des normes imposées aux constructeurs automobiles.

Le seuil de 17 tonnes correspond typiquement à un choc normalisé de type Danner, dont les dégâts causés aux véhicules doivent être suffisamment plus faibles pour que les compagnies d'assurance acceptent de prendre en charge leur réparation : on, parle souvent de chocs « réparabilité ».

Pour atteindre ces caractéristiques de résistance, ainsi que pour permettre la destruction successive du premier élément 1 et du deuxième élément 3, on joue sur la nature des plis de composite, ainsi que sur la manière dont on réalise leur nappage.

Plus précisément, on peut choisir des matériaux composites à fibres de verre, et à matrice en polyester ou en époxy.

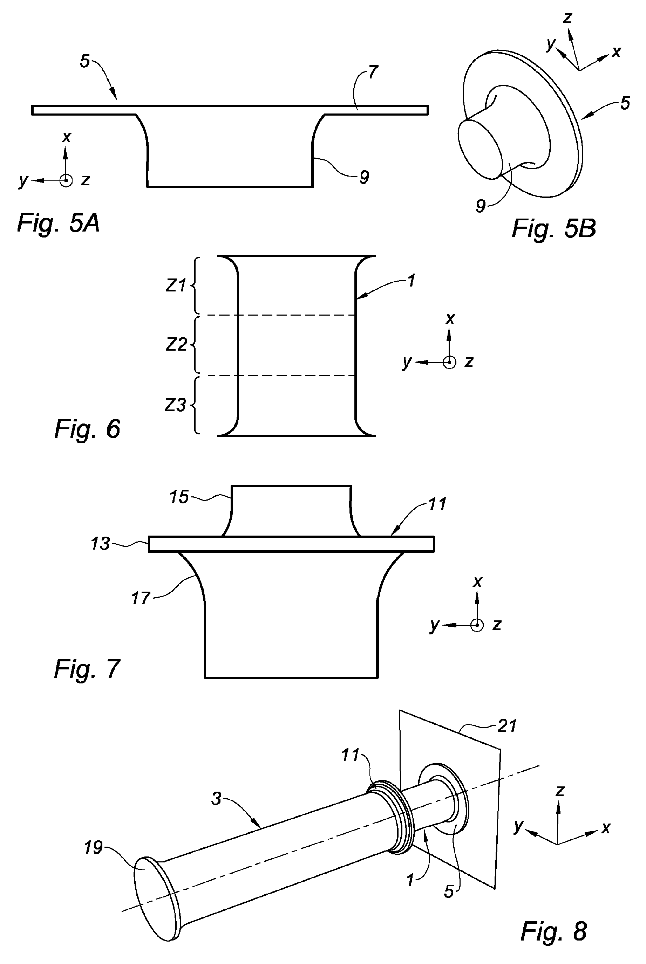

Concernant la manière dont on nappe ces plis de composite, on peut se reporter à la figure 6, sur laquelle on a représenté de manière détaillée, en vue de côté, le premier élément 1.

La partie supérieure de l'élément 1 représentée à la figure 6 correspond à la partie de cet élément située à droite de la figure 1A.

Comme on peut le voir, de sa partie supérieure à sa partie inférieure, l'élément 1 comporte trois zones distinctes Z1, Z2, Z3.

Dans la zone Z1, qui est donc située le plus proche de la zone du choc, on peut par exemple réaliser un nappage de dix plis de composite présentant chacun 0,8 mm d'épaisseur, deux de ces plis (les plis 5 et 10) étant par exemple disposés à 90° par rapport aux autres plis.

La zone Z2 peut être réalisée par 15 plis de 0,8 mm d'épaisseur dont trois sont orientés à 90° par rapport aux autres (plis 5, 10 et 15).

La zone Z3 peut quant à elle être obtenue par vingt plis de 0,8 mm, quatre de ces plis étant orientés à 90° par rapport aux autres (plis 5, 10, 15 et 20).

En d'autres termes, l'élément 1 est conçu de manière à présenter une résistance allant croissant de son extrémité située la plus proche de la zone d'impact à son extrémité la plus lointaine de cette zone.

De la même manière, et bien que cela n'ait pas été représenté, le deuxième élément 3 est de préférence réalisé en plusieurs zones présentant des caractéristiques de résistance différentes.

A titre d'exemple, la zone de ce deuxième élément située le plus proche du premier élément 1 peut être formée par vingt plis de composite de 0,6 mm d'épaisseur, avec des plis disposés respectivement à 45 et à 90° par rapport à des plis de référence.

La zone intermédiaire du deuxième élément 3 peut être formée par une trentaine de plis de même épaisseur, avec une disposition analogue à 45 et à 90°.

La zone du deuxième élément 3 située la plus éloignée du premier élément 1 peut quant à elle être formée par une quarantaine de plis d'une épaisseur de 0,6 mm, également orientés selon la disposition à 45 et à 90° par rapport à une direction de référence.

De la sorte, le deuxième élément 3 présente également une résistance accrue au fur et à mesure que l'on s'éloigne de la zone d'impact (située à droite de la figure 1A), et que l'on se rapproche du châssis du véhicule automobile (situé sur la gauche de la figure 1A).

Le premier élément 1 est destiné à être fixé au pare-choc du véhicule automobile par l'intermédiaire d'une première platine 5.

Comme cela est visible sur la figure 5A et 5B, cette platine comporte d'une part un plateau, et d'autre part une forme 9 qui s'évase au fur et à mesure qu'elle se rapproche du plateau 7.

La forme 9 est destinée à s'emboîter à l'intérieur du premier élément 1, qui présente également une forme évasée correspondante, comme cela est visible à la figure 6.

Les formes évasées qui se correspondent permettent de bien amorcer l'écrasement du premier élément 1 en cas de choc.

La platine 5 peut être formée en alliage métallique tel que de l'acier ou un alliage à base d'aluminium par exemple.

Cette platine peut également être formée en matériau composite.

Cette platine 5 peut être fixée au premier élément 1 par collage ou par rivetage par exemple.

A noter que cette platine 5 peut être également formée d'un seul tenant avec le premier élément 1.

Entre le premier élément 1 et le deuxième élément 3 se trouve une platine intermédiaire 11, visible sur la figure 1A et la figure 7, et comportant de part et d'autre d'un plateau 13 des formes évasées 15 et 7 destinées à s'emboîter respectivement à l'intérieur du premier élément 1 et du deuxième élément 3, de manière analogue à ce qui vient d'être décrit.

A son extrémité opposée à celle qui coopère avec la platine intermédiaire 11, le deuxième élément 3 coopère avec une deuxième platine 19, destinée à être fixée sur le châssis d'un véhicule automobile (non représenté).

Cette deuxième platine 19 est emboîtée à l'intérieur du deuxième élément 3 de la même manière que la platine intermédiaire 11.

Cette platine intermédiaire 11 et cette deuxième platine 19 peuvent également être formées en alliage métallique ou en matériau composite, éventuellement d'un seul tenant avec le deuxième élément 3, de même que la première platine 5.

Ces platines 11 et 19 peuvent également être fixées par exemple par collage ou par rivetage sur le deuxième élément 3.

Les sections des premier 1 et deuxième 3 éléments peuvent être circulaires, et ces deux éléments peuvent être cylindriques.

Ceci n'est toutefois pas limitatif, et l'on peut envisager des sections polygonales, telles que des sections hexagonales, comme représenté à la figure 4.

Cette variante a pour avantage de permettre une concentration des contraintes dans les arêtes des éléments 1 et 3, et ainsi une excellente maîtrise de la déformation de l'ensemble en cas de choc.

A noter que le choc que le dispositif selon l'invention doit pouvoir encaisser, est représenté de manière schématique à la figure 8, par une plaque 21 qui vient impacter le premier élément 1.

Cette plaque impactante permet de modaliser le choc lors des simulations par ordinateur, au moyen de logiciel du type RADIOSS, PAMCRASH, ou LS-DYNA.

Dans le mode de réalisation représenté aux figures 2A et 2B, on peut voir que l'on prévoit quatre barres 23 fixées aux platines 5, 11 et 19 : de telles barres permettent de guider l'écrasement des premier 1 et deuxième 3 éléments en cas de choc, et ainsi d'éviter que ces deux éléments ne s'écartent trop de la direction X, au risque de ne pas absorber suffisamment d'énergie liée au choc.

Dans le mode de réalisation des figures 3A et 3B, la plaque intermédiaire 11 présente un orifice, et est traversé par le premier élément 1, qui s'étend entre la première platine 5 et la deuxième platine 19.

Ce premier élément 1 est ainsi concentrique et disposé à l'intérieur du deuxième élément 3, sans être fixé à la platine intermédiaire 11.

Comme on peut le comprendre à la lumière de ce qui précède, la géométrie du dispositif selon l'invention, ainsi que l'utilisation de matériaux composites formés par des plis judicieusement agencés, permet d'encaisser des efforts très importants provoqués par un choc (typiquement jusqu'à 30 tonnes correspondant à un choc à 60 km /h), pour un encombrement global du dispositif qui est très faible (typiquement de l'ordre de 400 mm selon la direction X).

Ce dispositif convient donc tout particulièrement pour des véhicules de faibles dimensions, et notamment pour les véhicules électriques, dans lesquels on cherche à maximiser l'espace utile de l'habitacle, pour un gabarit extérieur de très faibles dimensions.

Qui plus est, et comme cela a été largement décrit dans ce qui précède, l'utilisation de matériaux composites permet de séquencer de manière très fiable la déformation du premier élément 1 et du deuxième élément 2.

Plus précisément, on peut concevoir le premier élément 1 de manière qu'il soit le seul à se déformer tant que le choc reste en dessous d'un seuil prédéterminé (typiquement, effort inférieur à 17 tonnes, correspondant à un choc à vitesse inférieure à 16 km/h).

De la sorte, seule une petite partie du dispositif d'absorption de choc (le premier élément 1) doit être changée dans le cas d'un tel choc à faible vitesse.

Le coût de la réparation s'en trouve donc allégé, de sorte qu'il peut plus aisément être pris en charge par les compagnies d'assurance.

Bien entendu, la présente invention n'est nullement limitée aux modes de réalisation décrits et représentés, fournis à titre de simples exemples.

C'est ainsi que l'on pourrait envisager d'autres variantes autour des principes généraux qui ont été exposés ci-dessus.

A titre indicatif, on pourrait par exemple remplir le premier élément 1 et/ou le deuxième élément 3 de mousse susceptible de contribuer à l'absorption de l'énergie du choc.

On pourrait également envisager que le premier élément 1 et le deuxième élément 3 ne soient pas cylindriques, mais par exemple coniques avec la partie de plus faible section du cône située la plus proche de la zone d'impact.

A noter bien entendu que le dispositif d'absorption de choc qui vient d'être décrit est destiné à être placé en deux exemplaires entre le châssis d'un véhicule automobile et la traverse du pare-choc de ce véhicule.

Ce dispositif d'absorption de choc est bien entendu complété par d'autres moyens d'absorption, tels qu'une mousse du type « BAYSAFE® », permettant de dissiper l'énergie d'un choc piéton, cette mousse étant elle-même destinée à être recouverte de la peau extérieure du pare-choc.

A noter également que ce dispositif d'absorption de choc est préférentiellement destiné à être positionné à l'avant d'un véhicule, mais qu'il n'est bien entendu pas exclu de pouvoir l'utiliser pour le pare-choc arrière d'un véhicule.

## Revendications

1. Dispositif d'absorption de choc en matériaux composites destiné à être interposé entre un pare-choc et le châssis d'un véhicule automobile, **caractérisé en ce qu'**il comprend un premier élément (1) en matériau composite, adapté pour absorber un choc à vitesse relativement basse, et un deuxième élément (3) en matériau composite, adapté pour absorber un choc à vitesse relativement élevée, ces éléments (1, 3) étant respectivement conçus et agencés pour que seul ledit premier élément (1) se déforme en cas de choc d'intensité inférieure à un seuil prédéterminé.

2. Dispositif selon la revendication 1, **caractérisé en ce que** lesdits moyens d'absorption de choc comprennent :
- une première platine (5) d'extrémité, destinée à être fixée audit pare-choc,
- une deuxième platine d'extrémité (19), destinée à être fixée audit châssis,
- une platine intermédiaire (11),
ledit premier élément (1) étant interposé entre ladite première platine (5) et ladite platine intermédiaire (11), et ledit deuxième élément (3) étant interposé entre ladite platine intermédiaire (11) et ladite deuxième platine.

3. Dispositif selon la revendication 2, **caractérisé en ce que** ledit premier élément (5) présente une longueur inférieure à celle dudit deuxième élément (11).

4. Dispositif selon la revendication 1, **caractérisé en ce que** lesdits moyens d'absorption de choc comprennent :
- une première platine d'extrémité (5), destinée à être fixée audit pare-choc,
- une deuxième platine d'extrémité (19), destinée à être fixée audit châssis,
- une platine intermédiaire (11) munie d'un orifice,
ledit premier élément (1) présentant une longueur supérieure à celle dudit deuxième élément (3), et étant interposé entre ladite première platine (5) et ladite deuxième platine (19) en traversant ladite platine intermédiaire (11), et ledit deuxième élément (3) étant concentrique audit premier élément (1) et étant interposé entre ladite platine intermédiaire (11) et ladite deuxième platine (19).

5. Dispositif selon l'une quelconque des revendications 2 à 4, **caractérisé en ce que** lesdits premier (1) et deuxième (3) éléments sont reliés auxdites platines (5, 11, 19) par des moyens de fixation choisis dans le groupe comprenant le collage et le rivetage.

6. Dispositif selon l'une quelconque des revendications 2 à 5, **caractérisé en ce que** lesdites platines (5, 11, 19) incorporent des formes de centrage desdits éléments, dont la section l'élargit dans la zone de raccord avec le plan (7, 13) de ladite platine (5, 11, 19).

7. Dispositif selon l'une quelconque des revendications 2 à 6, **caractérisé en ce que** lesdites platines (5, 11, 19) sont formées en alliage métallique choisi dans le groupe comprenant les aciers et les alliages à base d'aluminium.

8. Dispositif selon l'une quelconque des revendications 2 à 6, **caractérisé en ce que** lesdits éléments et lesdites platines (5, 11, 19) sont formés d'un seul tenant en matériau composite.

9. Dispositif selon l'une quelconque des revendications 2 à 8, **caractérisé en ce que** des barres (23) sont fixées auxdites platines (5, 11, 19).

10. Dispositif selon l'une quelconque des revendications précédentes, **caractérisé en ce que** lesdits premier (1) et deuxième (3) éléments sont cylindriques.

11. Dispositif selon l'une quelconque des revendications précédentes, **caractérisé en ce que** les sections desdits premier (1) et deuxième (3) éléments sont choisies dans le groupe comprenant les sections circulaires et polygonales.

12. Dispositif selon l'une quelconque des revendications précédentes, **caractérisé en ce que** lesdits premier (1) et deuxième (3) éléments sont formés à partir de plis superposés de composites dont les fibres sont orientées dans différentes directions.

13. Dispositif selon l'une quelconque des revendications précédentes, **caractérisé en ce que** lesdits premier (1) et deuxième (3) éléments sont formés à partir de plis de composites superposés, dont le nombre de couches augmente en allant de la zone de ces éléments (1, 3) destinée à être la plus proche dudit pare-choc, à la zone de ces éléments (1, 3) destinée à être la plus proche dudit châssis.

14. Dispositif selon l'une quelconque des revendications précédentes, **caractérisé en ce que** lesdits premier (1) et deuxième (3) éléments sont formés à partir de plis de composites à fibres de verre et à matrice choisie dans le groupe comprenant le polyester et l'époxy.

15. Véhicule automobile comprenant un pare-choc et un châssis, **caractérisé en ce qu'**il comprend au moins un dispositif d'absorption de choc conforme à l'une quelconque des revendications précédentes, interposé entre ledit pare-choc et ledit châssis.
